# EUROPEAN PATENT APPLICATION

(11) **EP 3 736 728 A1**
(43) Date of publication of application: **11.11.2020**
(21) Application number: 19178084.0
(22) Date of filing: 04.06.2019
(51) Int. Cl.: G06K 9/00, G06K 9/20

(54) **AUGMENTED REALITY SYSTEM AND METHOD OF DETERMINING MODEL AND INSTALLATION LOCATION OF A MOTION SENSOR**

(30) Priority: 06.05.2019 TW 108115488
(71) Applicant: Climax Technology Co., Ltd., Taipei 114 (TW)
(72) Inventor: CHEN, Yi-Kai, Taipei City, Taiwan 10850 (CN); LIU, Tang Hui, Taipei City, Taiwan 11469 (CN)
(74) Representative: Karakatsanis, Georgios

(57) **Abstract**

A method of determining a model or installation location of a motion sensor includes scanning an installation scene for the motion sensor to capture a scene image corresponding to the installation scene; selecting a model of a preferred motion sensor from a database according to a predetermined sensing location or determining a preferred installation location of a selected motion sensor; and generating a computer-generated image representing the preferred motion sensor or the preferred installation location, which overlays the scene image and is disposed above the predetermined sensing location to result in and display an augmented reality (AR) image.

## Description

### BACKGROUND OF THE INVENTION

### 1. FIELD OF THE INVENTION

The present invention generally relates to augmented reality (AR), and more particularly to an AR system and method of determining a model of a preferred motion sensor or a preferred installation location.

### 2. DESCRIPTION OF RELATED ART

An infrared (IR) motion sensor is a motion sensor configured to detect a moving object such as a person. The IR motion sensor is commonly incorporated to a system to perform a specific task such as security, home control or energy (e.g., lighting) efficiency control.

The IR motion sensor ("motion sensor" hereinafter) may be installed indoors or outdoors. When installing the motion sensor, an installer commonly uses a usual ruler or a laser pointer to measure proper height and location. In order to obtain a proper installation location, repeated efforts are required even for a skilled installer. Further, as a wide variety of manufacturers and models of motion sensors provide different parameters (e.g., sensing distance and sensing angle), it is ordinarily time-consuming to select a proper motion sensor. More often than not, an unsuitable motion sensor may be selected.

A need has thus arisen to propose a novel scheme to determine a model of a preferred motion sensor or a preferred installation location of a motion sensor, therefore facilitating selecting or installing the motion sensor.

### SUMMARY OF THE INVENTION

In view of the foregoing, it is an object of the embodiment of the present invention to provide an augmented reality (AR) system and method of determining a model of a preferred motion sensor or a preferred installation location of a motion sensor, therefore facilitating selecting or installing the motion sensor by a user.

According to one embodiment, a method of determining a model of a motion sensor includes (a) scanning an installation scene for the motion sensor to capture a scene image corresponding to the installation scene; (b) selecting a model of a preferred motion sensor from a database according to a predetermined sensing location; and (c) generating a computer-generated image representing the preferred motion sensor, which overlays the scene image and is disposed above the predetermined sensing location to result in and display an augmented reality (AR) image.

According to another embodiment, a method of determining an installation location of a motion sensor includes (a) selecting a model of a motion sensor; (b) scanning an installation scene for the motion sensor to capture a scene image corresponding to the installation scene; (c) determining a preferred installation location of the motion sensor; and (d) generating a computer-generated image representing the preferred installation location, which overlays the scene image and is disposed above a predetermined sensing location to result in and display an augmented reality (AR) image.

### BRIEF DESCRIPTION OF THE DRAWINGS

FIG. 1 shows a perspective view of an indoor scene;
FIG. 2 shows a block diagram illustrating the AR system of FIG. 1;
FIG. 3 shows a flow diagram illustrating a method of determining a model of a preferred motion sensor;
FIG. 4 shows a perspective view illustrating a cone covered by the sensing distance and the sensing angle of a motion sensor; and
FIG. 5 shows a flow diagram illustrating a method of determining a preferred installation location of a motion sensor.

### DETAILED DESCRIPTION OF THE INVENTION

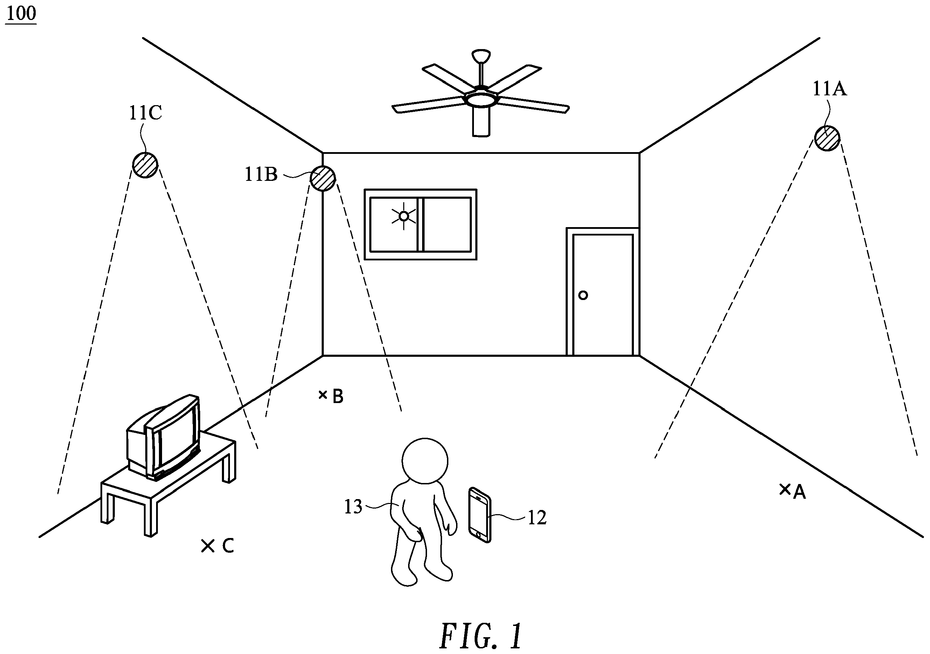

FIG. 1 shows a perspective view of an indoor scene 100 exemplifying some infrared (IR) motion sensors 11A, 11B and 11C. Although IR motion sensors ("motion sensors" hereinafter) are exemplified here, it is appreciated that the embodiment may adopt other motion sensors such as microwave sensors or ultrasonic sensors. An augmented reality (AR) system 12 is provided in the embodiment to display an AR image, and to determine a model of a preferred motion sensor or to determine a preferred installation location of a motion sensor, for assisting a user 13 (e.g., installer) in installing the motion sensor. The AR system 12 of the embodiment may include a mobile device (e.g., tablet personal computer (PC) or mobile phone).

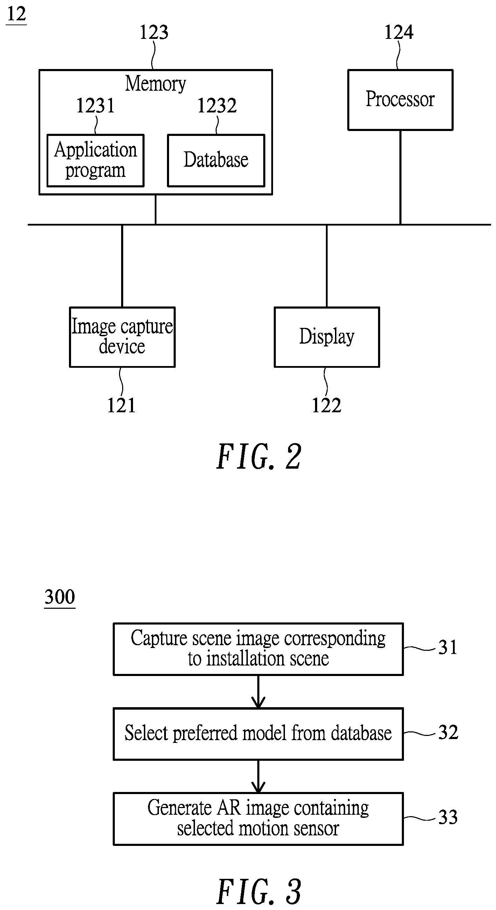

FIG. 2 shows a block diagram illustrating the AR system 12 of FIG. 1. In the embodiment, the AR system 12 may include an image capture device 121 (e.g., camera) for capturing a scene image. The AR system 12 may include a display 122 (e.g., liquid crystal display) for displaying the captured scene image. In the specification, the image capture device 121 may capture continuous multiple images to result in a video. The image capture device 121 may capture a single image to result in a still image instead.

The AR system 12 may include a memory 123 (e.g., read-only memory (ROM), random-access memory (RAM) and/or flash) for storing the captured scene image, and storing an application program 1231 and a database 1232 that may contain models and parameters (e.g., sensing distance and sensing angle) of multiple motion sensors. The AR system 12 may include a processor 124 that may execute the application program 1231 and generate a computer-generated image representing the motion sensor, the computer-generated image overlaying the captured scene image to result in the AR image to be displayed on the display 122. Conventional AR image technique may be adopted to perform image overlaying and superposition, and is thus omitted for brevity.

FIG. 3 shows a flow diagram illustrating the application program 1231 stored in the memory 123 of FIG. 2, and illustrating a method 300 of determining a model of a preferred motion sensor. In step 31, the image capture device 121 of the AR system 12 may be used to scan an installation scene (e.g., indoor scene 100 as exemplified in FIG. 1) for the motion sensor to capture a scene image corresponding to the installation scene.

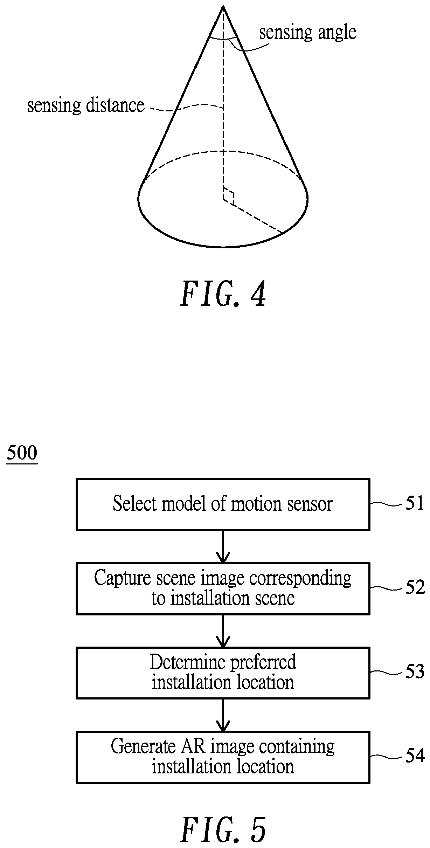

Next, in step 32, the processor 124 of the AR system 12 may select a model of a preferred motion sensor from the database 1232 according to a predetermined sensing location (e.g., location A, B or C as exemplified in FIG. 1). In one embodiment, the processor 124 may determine a proper sensing distance and a proper sensing angle according to a spatial feature (e.g., spatial size) around the predetermined sensing location, thereby determining the model of a corresponding motion sensor. Accordingly, the sensing distance and the sensing angle of the determined motion sensor can capably cover space with such spatial size. FIG. 4 shows a perspective view illustrating a cone covered by the sensing distance and the sensing angle of a motion sensor, where a height of the cone corresponds to the sensing distance, and an apex angle of the cone corresponds to the sensing angle. As exemplified in the indoor scene 100 of FIG. 1, the spatial size around the predetermined sensing location A is larger than the spatial size around the predetermined sensing location B, and the models corresponding to the predetermined sensing locations A and B are therefore different in general. As space around the predetermined sensing location C is blocked by objects, a corresponding spatial size is thus small, and the corresponding model is thus different from the models corresponding to the predetermined sensing locations A and B.

In step 33, the processor 124 may generate a computer-generated image representing the selected preferred motion sensor according to the model of the preferred motion sensor. The computer-generated image overlays the scene image and is disposed above the predetermined sensing location (e.g., on a wall or ceiling), therefore resulting in an AR image to be displayed on the display 122. In one embodiment, in addition to the an image representing the selected motion sensor, the computer-generated image may also include corresponding sensing distance and/or sensing angle as designated by dotted lines in FIG. 1.

FIG. 5 shows a flow diagram illustrating the application program 1231 stored in the memory 123 of FIG. 2, and illustrating a method 500 of determining a preferred installation location of a motion sensor. In step 51, a model of a motion sensor may be selected. The model may be automatically selected according to the method 300 of determining a model of a preferred motion sensor in FIG. 3, or may be manually selected by the user 13. In step 52, the image capture device 121 of the AR system 12 may be used to scan an installation scene (e.g., indoor scene 100 as exemplified in FIG. 1) for the motion sensor to capture a scene image corresponding to the installation scene.

Next, in step 53, a preferred installation location (e.g., height and orientation) of the motion sensor may be determined. In the embodiment, the processor 124 may determine the preferred installation location (e.g., height and orientation) of the motion sensor according to parameters (e.g., sensing distance and sensing angle) of the motion sensor and in consideration of an object around a predetermined sensing location. In one embodiment, the processor 124 determines preferred installation height according to the sensing distance of the motion sensor. Moreover, the processor 124 determines preferred installation orientation according to a blocking object around the predetermined sensing location, such that the space covered by the motion sensor has been least blocked by the object. Conventional image processing technique may be adopted to determine blockage or occlusion, and is thus omitted for brevity.

Finally, in step 54, the processor 124 may generate a computer-generated image representing the preferred installation location of the motion sensor. The computer-generated image overlays the scene image to mark the preferred installation location, therefore resulting in an AR image to be displayed on the display 122. Accordingly, the user 13 (e.g., installer) may install the motion sensor according to the AR image.

## Claims

1. A method of determining a model of a motion sensor, comprising:
(a) scanning an installation scene for the motion sensor to capture a scene image corresponding to the installation scene;
(b) selecting a model of a preferred motion sensor from a database according to a predetermined sensing location; and
(c) generating a computer-generated image representing the preferred motion sensor, which overlays the scene image and is disposed above the predetermined sensing location to result in and display an augmented reality (AR) image.

2. The method of claim 1, wherein the step (b) comprises:
determining a sensing distance and a sensing angle according to a spatial feature around the predetermined sensing location, thereby determining the model of the preferred motion sensor.

3. The method of claim 2, wherein the spatial feature around the predetermined sensing location comprises a spatial size of space covered by the preferred motion sensor.

4. The method of claim 3, wherein the sensing distance and the sensing angle of the preferred motion sensor capably cover the space with the spatial size.

5. The method of claim 1, wherein the computer-generated image further comprises a sensing distance and/or a sensing angle of the preferred motion sensor.

6. A method of determining an installation location of a motion sensor, comprising:
(a) selecting a model of a motion sensor;
(b) scanning an installation scene for the motion sensor to capture a scene image corresponding to the installation scene;
(c) determining a preferred installation location of the motion sensor; and
(d) generating a computer-generated image representing the preferred installation location, which overlays the scene image and is disposed above a predetermined sensing location to result in and display an augmented reality (AR) image.

7. The method of claim 6, wherein the step (c) comprises:
determining the preferred installation location according to parameters of the motion sensor and in consideration of an object around the predetermined sensing location.

8. The method of claim 7, wherein the parameters of the motion sensor comprise a sensing distance and a sensing angle.

9. The method of claim 8, wherein the preferred installation location comprises height and orientation.

10. The method of claim 9, wherein the height of the preferred installation location is determined according to the sensing distance of the motion sensor.

11. The method of claim 9, wherein the orientation of the preferred installation location is determined according to a blocking object around the predetermined sensing location, such that space covered by the motion sensor is least blocked by the object.

12. An augmented reality (AR) system, comprising:
an image capture device that scans an installation scene for a motion sensor to capture a scene image corresponding to the installation scene;
a display that displays the scene image;
a memory that stores the scene image, an application program and a database containing models and parameters of a plurality of motion sensors; and
a processor that executes the application program, the processor selecting a model of a preferred motion sensor from the database according to a predetermined sensing location or determining a preferred installation location of a selected motion sensor;
wherein the processor generates a computer-generated image representing the preferred motion sensor or representing the preferred installation location, the computer-generated image overlaying the scene image and being disposed above the predetermined sensing location to result in and display an AR image.

13. The system of claim 12, wherein the motion sensor comprises an infrared motion sensor.

14. The system of claim 12, wherein the processor determines a sensing distance and a sensing angle according to a spatial feature around the predetermined sensing location, thereby determining the model of the preferred motion sensor.

15. The system of claim 12, wherein the processor determines the preferred installation location according to parameters of the selected motion sensor and in consideration of an object around the predetermined sensing location.

## Amended claims

### Amended claims in accordance with Rule 137(2) EPC.

1. A method of generating an augmented reality image of a motion sensor (11A/11B/11C), comprising:
(a) scanning an installation scene for the motion sensor to capture a scene image corresponding to the installation scene;
(b) selecting a motion sensor from a database (1232); and
(c) generating a computer-generated image representing the elected motion sensor, the computer-generated image being overlaid on the captured scene image to result in the augmented reality image, **characterized in that**:
the computer-generated image comprises an overlaying image representing a sensing distance and a sensing angle of the selected motion sensor, the sensing distance being defined as a distance between the selected motion sensor and a sensing location (A/B/C), and the sensing angle being defined as an angle with which the selected motion sensor points at the sensing location, thereby facilitating installing the motion sensor.

2. A method of generating an augmented reality image of a motion sensor (11A/11B/11C), comprising:
(a) selecting a motion sensor;
(b) scanning an installation scene for the motion sensor to capture a scene image corresponding to the installation scene;
(c) determining an installation location according to parameters of the selected motion sensor, the parameters of the selected motion sensor including a sensing distance and a sensing angle, the sensing distance being defined as a distance between the selected motion sensor and a sensing location (A/B/C), and the sensing angle being defined as an angle with which the selected motion sensor points at the sensing location; and
(d) generating a computer-generated image representing the determined installation location, the computer-generated image being overlaid on the captured scene image the augmented reality image, **characterized in that**:
the computer-generated image comprises an overlaying image representing the sensing distance and the sensing angle of the selected motion sensor, thereby facilitating installing the motion sensor.

3. The method of claim 2, wherein the determined installation location comprises height and orientation.

4. The method of claim 3, wherein the height of the determined installation location is determined according to the sensing distance of the motion sensor.

5. The method of claim 3, wherein the orientation of the determined installation location is determined according to a blocking object around the determined installation location, such that space covered by the selected motion sensor is least blocked by the object.

6. An augmented reality system, comprising:
an image capture device (121) that scans an installation scene for a motion sensor (11A/11B/11C) to capture a scene image corresponding to the installation scene;
a display (122) that displays the scene image;
a memory (123) that stores the scene image, an application program (1231) and a database (1232) containing parameters of a plurality of motion sensors; and
a processor (124) that executes the application program;
wherein the processor generates a computer-generated image representing a selected motion sensor or representing an installation location, the computer-generated image being overlaid on the scene image to result in an augmented reality image,
**characterized in that**:
the computer-generated image comprises an overlaying image representing a sensing distance and a sensing angle of the selected motion sensor, the sensing distance being defined as a distance between the selected motion sensor and a sensing location (A/B/C), and the sensing angle being defined as an angle with which the selected motion sensor points at the sensing location, thereby facilitating installing the motion sensor.

7. The system of claim 6, wherein the motion sensor comprises an infrared motion sensor.

8. The system of claim 6, wherein the processor determines the installation location according to parameters of the selected motion sensor and in consideration of an object around the sensing location.
